# EUROPEAN PATENT APPLICATION

(11) **EP 4 404 625 A1**
(43) Date of publication of application: **24.07.2024**
(21) Application number: 22897522.3
(22) Date of filing: 26.10.2022
(51) Int. Cl.: H04W 36/00

(54) **CELL HANDOVER METHOD, TERMINAL DEVICE, AND READABLE STORAGE MEDIUM**

(30) Priority: 23.11.2021 CN 202111396499
(71) Applicant: Huawei Technologies Co., Ltd., Shenzhen, Guangdong 518129 (CN)
(72) Inventor: HUANG, Chao, Shenzhen, Guangdong 518129 (CN); GUO, Ao, Shenzhen, Guangdong 518129 (CN); WANG, Weifang, Shenzhen, Guangdong 518129 (CN)
(74) Representative: MERH-IP Matias Erny Reichl Hoffmann Patentanwälte PartG mbB
(86) International application number: PCT/CN2022/127707
(87) International publication number: WO 2023/093439

(57) **Abstract**

This application provides a cell handover method, a terminal device, and a readable storage medium, and relates to the field of communication technologies. The method is applied to the terminal device. The terminal device accesses a first cell, and the method includes: determining a second cell from neighboring cells of the first cell based on a service type of a foreground service of the terminal device and a support status of the first cell for a CDRX configuration capability, where the service type includes a real-time service and a non-real-time service; and handing over a cell accessed by the terminal device from the first cell to the second cell. According to the technical solutions provided in embodiments of this application, the terminal device can select, based on the service type of the foreground service, a proper cell for camping on, so that power consumption of the terminal device and a delay requirement are considered in a cellular communication process.

## Description

This application claims priority to Chinese Patent Application No. 202111396499.9, filed with the China National Intellectual Property Administration on November 23, 2021 and entitled "CELL HANDOVER METHOD, TERMINAL DEVICE, AND READABLE STORAGE MEDIUM", which is incorporated herein by reference in its entirety.

### TECHNICAL FIELD

This application relates to the field of communication technologies, and in particular, to a cell handover method, a terminal device, and a readable storage medium.

### BACKGROUND

After successfully camping on a cell, a terminal device (for example, a mobile phone) may communicate with a network device corresponding to the cell, and access a cellular network, to make a cellular call or use cellular data.

Currently, a terminal device and a network device establish a radio resource control (radio resource control, RRC) connection for communication. After the RRC connection is successfully established, the terminal device is in an RRC connected state. For the RRC connected state, the network device usually configures a determined data reception mode for the terminal device, for example, a connected continuous reception (connected continuous reception, CCRX) mode or a connected discontinuous reception (connected discontinuous reception, CDRX) mode. In the CCRX mode, the terminal device continuously receives data, power consumption is high, but a delay is low. In the CDRX mode, the terminal device intermittently receives data, a delay is high, but power consumption is low. The terminal device processes various communication services, some services (such as a video call service) have a high delay requirement, and some services (such as a short message service) have a low delay requirement. If the terminal device always receives data in the CCRX mode or the CDRX mode, power consumption of the terminal device and delay requirements of different services cannot be considered.

### SUMMARY

This application provides a cell handover method, a terminal device, and a readable storage medium, to resolve a problem, in the conventional technology, that power consumption and a delay requirement cannot be considered during cellular communication of a terminal device.

To achieve the foregoing objective, this application uses the following technical solutions.

According to a first aspect, this application provides a cell handover method, applied to the terminal device. The terminal device accesses a first cell, and the method includes: determining a second cell from neighboring cells of the first cell based on a service type of a foreground service of the terminal device and a support status of the first cell for a CDRX configuration capability, where the service type includes a real-time service and a non-real-time service; and handing over a cell accessed by the terminal device from the first cell to the second cell.

According to the cell handover method provided in an embodiment of this application, the terminal device may select, based on whether the foreground service is the real-time service or the non-real-time service and a support status of a currently camped-on first cell for a CDRX configuration capability, a proper second cell from the neighboring cells of the first cell for connection, so that power consumption of the terminal and a delay requirement of the foreground service are considered.

For example, for the real-time service, the terminal device may choose to camp on a cell that does not support the CDRX configuration capability, to meet the delay requirement of the foreground service. For the non-real-time service, the terminal device may choose to camp on a cell that supports the CDRX configuration capability, to reduce the power consumption of the terminal device.

In some embodiments, after detecting a first trigger event, the terminal device determines the second cell from the neighboring cells of the first cell based on the service type of the foreground service of the terminal device and the support status of the first cell for the CDRX configuration capability.

In some embodiments, the first trigger event is that the terminal device detects, in a process of processing the foreground service, that a neighboring cell of the first cell changes; a foreground of the terminal device switches from a no-service state to a state of processing the foreground service; or a foreground of the terminal device switches from processing a first service to processing a second service, and a service type of the first service is different from a service type of the second service.

It should be noted that the first service and the second service may be different specific services of a same application (for example, a chat service and a video call service of an instant messaging application), or may be respective services of different applications (for example, a chat service of an instant messaging application and a web browsing service of a browser).

In some embodiments, the determining a second cell from neighboring cells of the first cell based on a service type of a foreground service of the terminal device and a support status of the first cell for a CDRX configuration capability includes: if the service type of the foreground service is the real-time service, and the first cell supports the CDRX configuration capability, determining the second cell from the neighboring cells of the first cell, where the second cell does not support the CDRX configuration capability.

According to the cell handover method provided in this embodiment, the terminal device may select, for the real-time service, a cell that does not support the CDRX configuration capability for camping on, so that the terminal device receives, in real time, downlink data sent by a network device, thereby reducing a delay in a communication process.

In some embodiments, the determining a second cell from neighboring cells of the first cell based on a service type of a foreground service of the terminal device and a support status of the first cell for a CDRX configuration capability includes: if the service type of the foreground service is the real-time service, and the first cell and the neighboring cells of the first cell all support the CDRX configuration capability, determining the second cell from the neighboring cells of the first cell, where a CDRX cycle of the second cell is less than a CDRX cycle of the first cell.

According to the method provided in this embodiment, when both a primary cell of the terminal device and a neighboring cell support the CDRX configuration capability, that is, both the primary cell and the neighboring cell can intermittently receive downlink data of a network device only in a CDRX mode, the terminal device may select a cell with a small CDRX cycle from the neighboring cells for connection. For example, the terminal device may select a neighboring cell with a shortest CDRX cycle as the second cell for connection, to minimize a delay of the foreground service. Alternatively, a neighboring cell whose CDRX cycle is equivalent to a delay requirement is used as the second cell, to meet both power consumption of the terminal device and a delay requirement.

In some embodiments, the determining a second cell from neighboring cells of the first cell based on a service type of a foreground service of the terminal device and a support status of the first cell for a CDRX configuration capability includes: if the service type of the foreground service is the non-real-time service, and the first cell does not support the CDRX configuration capability, determining the second cell from the neighboring cells of the first cell, where the second cell supports the CDRX configuration capability.

According to the method provided in this embodiment, the terminal device may select, for the non-real-time service, a cell that supports the CDRX configuration capability, so that the terminal device intermittently receives data sent by a network device, thereby reducing power consumption of the terminal device.

In some embodiments, the determining a second cell from neighboring cells of the first cell based on a service type of a foreground service of the terminal device and a support status of the first cell for a CDRX configuration capability includes: if the service type of the foreground service is the non-real-time service, and the first cell supports the CDRX configuration capability, determining the second cell from the neighboring cells of the first cell, where the second cell supports the CDRX configuration capability, and a CDRX cycle of the second cell is greater than a CDRX cycle of the first cell.

According to the method provided in this embodiment, the terminal device may select a cell with a large CDRX cycle for the non-real-time service for connection, so that when the terminal device intermittently receives data sent by a network device in a case in which a delay requirement of the foreground service is met, power consumption of the terminal device is reduced as much as possible.

In some embodiments, the determining the second cell from the neighboring cells of the first cell, where the second cell does not support the CDRX configuration capability includes: determining the second cell from the neighboring cells of the first cell, where the second cell does not support the CDRX configuration capability, and meets a power screening condition and/or a signal-to-noise ratio screening condition.

In some embodiments, the determining the second cell from the neighboring cells of the first cell, where the second cell supports the CDRX configuration capability includes: determining the second cell from the neighboring cells of the first cell, where the second cell supports the CDRX configuration capability, and meets at least one of a cycle screening condition, a power screening condition, or a signal-to-noise ratio screening condition.

In some embodiments, the power screening condition is |RSRP_{servingcel} -RSRP (*i*)<*δ*ₜₕ, where RSRP_{servingcel} is reference signal received power of the first cell, RSRP (*i*) is reference signal received power of an *i*^{th} neighboring cell of the first cell, and *δ*ₜₕ is a reference signal received power difference measurement threshold. Alternatively, the power screening condition is that RSRP (*i*) is greater than or equal to a reference signal received power threshold.

By using the power screening condition, the terminal device may determine a second cell whose RSRP is not lower than that of the first cell, to avoid deterioration of communication quality after the terminal device is handed over from the first cell to the second cell.

In some embodiments, the signal-to-noise ratio screening condition is SINR (*i*) >*δ*ₒₚ where SINR (*i*) is a signal-to-noise ratio of the *i*^{th} neighboring cell of the first cell, and *δ*ₒₚ is a signal-to-noise ratio threshold.

Alternatively, the signal-to-noise ratio screening condition is |SINR_{servingcel} - SINR (*i*)|< *δ*_{SINR}, where SINR_{servingcel} is a signal-to-noise ratio of the first cell, SINR (*i*) is a signal-to-noise ratio of the *i*^{th} neighboring cell of the first cell, and *δ*_{SINR} is a signal-to-noise ratio difference measurement threshold.

By using the signal-to-noise ratio screening condition, the terminal device may determine a second cell with a high signal-to-noise ratio, to ensure communication quality after the terminal device is handed over from the first cell to the second cell.

In some embodiments, the cycle screening condition is that the CDRX cycle is less than a time threshold. By using the cycle screening condition, an excessively high delay of the terminal device can be avoided in a process of processing the foreground service.

Alternatively, the cycle screening condition is that the CDRX cycle is a maximum value in CDRX cycles of candidate cells, where the candidate cell includes a neighboring cell that meets the power screening condition and/or the signal-to-noise ratio screening condition. By using the cycle screening condition, power consumption of the terminal device can be minimized in a process of processing the foreground service.

Alternatively, the cycle screening condition is that the CDRX cycle is a minimum value in CDRX cycles of candidate cells, where the candidate cell includes a neighboring cell that meets the power screening condition and/or the signal-to-noise ratio screening condition. By using the cycle screening condition, a delay of the terminal device can be minimized in a process of processing the foreground service.

Alternatively, the cycle screening condition is that a correspondence between a delay requirement of the foreground service and the CDRX cycle is met. By using the cycle screening condition, the terminal device can be enabled to consider power consumption and a delay in a process of processing the foreground service.

Optionally, in the cycle screening condition, the CDRX cycle is a long CDRX cycle. This is because when the foreground service is the non-real-time service, the terminal device receives downlink data based on the long CDRX cycle in most cases. Therefore, when the second cell is determined based on the long CDRX cycle, a more proper second cell can be determined.

According to a second aspect, an embodiment of this application provides a cell handover apparatus, used in a terminal device. The terminal device accesses a first cell, and the apparatus includes:
a determining module, configured to determine a second cell from neighboring cells of the first cell based on a service type of a foreground service of the terminal device and a support status of the first cell for a CDRX configuration capability, where the service type includes a real-time service and a non-real-time service; and
a handover module, configured to hand over a cell accessed by the terminal device from the first cell to the second cell.

According to a third aspect, an embodiment of this application provides a terminal device. The terminal device accesses a first cell, and the terminal device is configured to perform the cell handover method in the first aspect.

According to a fourth aspect, an embodiment of this application provides a chip. The chip includes a processor, and the processor executes a computer program stored in a memory, to implement the cell handover method in the first aspect.

According to a fifth aspect, an embodiment of this application provides a computer-readable storage medium. The computer-readable storage medium stores a computer program, and when the computer program is executed by a processor, the cell handover method in the first aspect is implemented.

According to a sixth aspect, an embodiment of this application provides a computer program product. The program product includes a computer program, and when the computer program is run by a terminal device, the terminal device is enabled to implement the cell handover method in the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of cell distribution according to an embodiment of this application;
FIG. 2 is a schematic diagram of an inter-device mobile communication system according to an embodiment of this application;
FIG. 3 is a schematic diagram of user plane and control plane protocol stacks of a terminal device and a network device according to an embodiment of this application;
FIG. 4 is a schematic diagram of a current of an entire system of a terminal device according to an embodiment of this application;
FIG. 5 is a schematic flowchart of a cell handover method according to an embodiment of this application;
FIG. 6 is a schematic diagram of a CDRX cycle according to an embodiment of this application;
FIG. 7 is a schematic flowchart of a cell handover method according to another embodiment of this application;
FIG. 8 is a schematic diagram of a process of determining a second cell according to an embodiment of this application;
FIG. 9 is a schematic diagram of a process of determining a second cell according to another embodiment of this application;
FIG. 10 is a schematic diagram of a structure of a terminal device according to an embodiment of this application; and
FIG. 11 is a schematic diagram of a structure of a chip according to an embodiment of this application.

### DESCRIPTION OF EMBODIMENTS

The following describes technical solutions provided in embodiments of this application with reference to the accompanying drawings.

It should be understood that in descriptions in embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists.

The terms "first" and "second" in embodiments are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

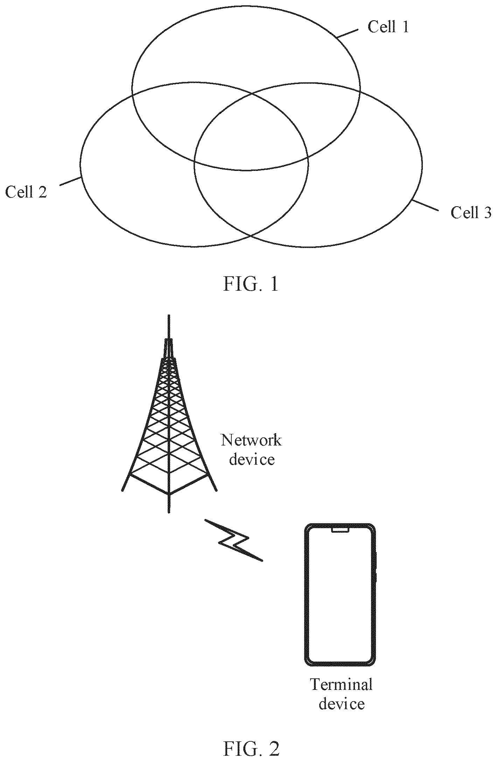

In a cellular mobile communication system, a signal coverage area of a network device or a part (for example, a fan-sectorized antenna) of the network device is referred to as a cell. For example, as shown in FIG. 1, to ensure that a terminal device at a cell edge can find a cell, cells are usually distributed in an overlapping manner, and an overlapping part between two neighboring cells accounts for about one third of a single cell. Therefore, the terminal device can find a plurality of cells at some locations (for example, an overlapping area of the plurality of cells).

Currently, after finding a plurality of cells, the terminal device selects, by default, a cell with maximum reference signal received power (reference signal received power, RSRP) from the plurality of cells for camping on. After successfully camping on the cell, the terminal device may communicate with a network device corresponding to the cell, and access a cellular network, to make a cellular call or use cellular data. In this embodiment, a cell on which the terminal device currently camps is referred to as a primary cell or a serving cell, and a cell that can be found by the terminal device but on which the terminal device does not camp is referred to as a neighboring cell, a neighboring cell, or a neighboring cell.

FIG. 2 is a schematic diagram of an inter-device mobile communication system according to an embodiment of this application. Refer to FIG. 2. The communication system includes a network device and a terminal device. A link used by the terminal device to send data to the network device is referred to as an uplink (uplink), and a link used by the terminal device to receive data sent by the network device is referred to as a downlink (downlink).

In a mobile communication system, the network device may be an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, may be a next generation base station (next generation NodeB, gNB) in a new radio (new radio, NR) system, or may be a component or some of devices that is/are included in a base station, for example, a central unit (central unit, CU), a distributed unit (distributed unit, DU), baseband unit (baseband unit, BBU), or the like.

The terminal device in the mobile communication system may also be referred to as a terminal, user equipment (user equipment, UE), a mobile station (mobile station, MS), a mobile terminal (mobile terminal, MT), or the like. The terminal device in embodiments of this application may be a mobile phone (mobile phone), a tablet (Pad), or a computer with a wireless transceiver function, or may be a wireless terminal used in scenarios such as virtual reality (virtual reality, VR), augmented reality (augmented reality, AR), industrial control (industrial control), self driving (self driving), telemedicine (remote medical), a smart grid (smart grid), transportation safety (transportation safety), a smart city (smart city), a smart home (smart home), and the like. It should be noted that a specific technology and a specific device form used for the terminal device are not limited in embodiments of this application.

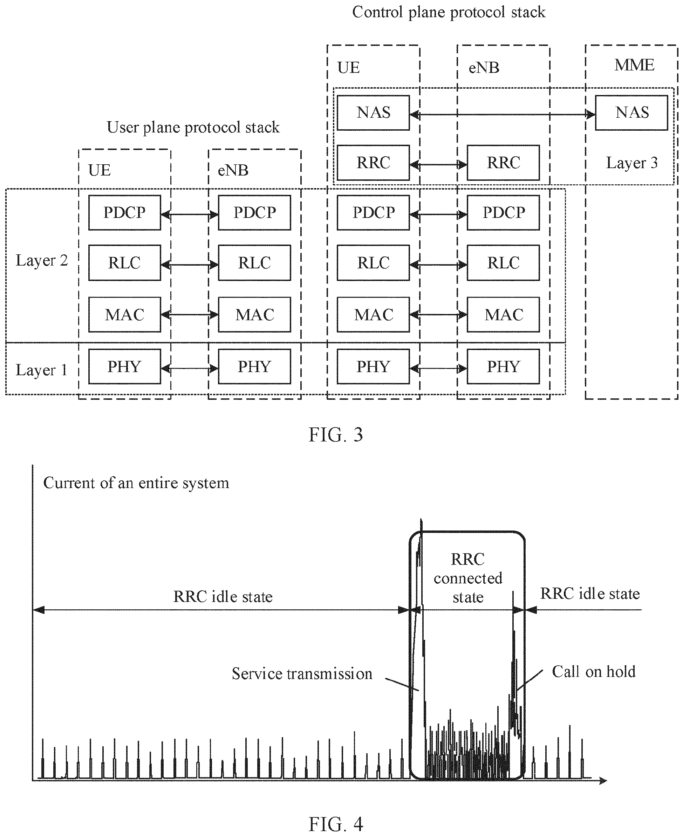

In some embodiments, refer to FIG. 3. A user plane protocol stack of the terminal device and a user plane protocol stack of the network device include a packet data convergence protocol (packet data convergence protocol, PDCP) layer, a radio link control (radio link control, RLC) layer, a media access control (media access control, MAC) layer, and a physical (physics, PHY) layer. A control plane protocol stack of the terminal device includes a non-access stratum (non-access stratum, NAS), a radio resource control (radio resource control, RRC) layer, a PDCP layer, an RLC layer, a MAC layer, and a PHY layer. A base station of the network device includes an RRC layer, a PDCP layer, an RLC layer, a MAC layer, and a PHY layer, and a mobility management entity (mobility management entity, MME) of the network device includes a NAS. The PHY layer is located at a lowest layer, and may also be referred to as a layer 1 (Layer 1). The MAC layer, the RLC layer, and the PDCP layer belong to an intermediate layer, and may also be referred to as a layer 2 (Layer 2). The RRC layer and the NAS belong to a higher layer, and may also be referred to as a layer 3 (Layer 3). A main function of the layer 1 is to provide reliable transmission of bit streams between two physical entities and adapt a transmission medium. Main functions of the layer 2 are channel multiplexing and demultiplexing, data format encapsulation, data packet scheduling, and the like. Main functions of the layer 3 are addressing, route selection, connection establishment and control, resource configuration policies, and the like.

For the RRC layer, a status of the terminal device includes an RRC idle (RRC_IDLE) state and an RRC connected (RRC_CONNECTED) state. The RRC_IDLE state and the RRC_CONNECTED state are separately explained below.

### (1) RRC_IDLE state

If no RRC connection is established between the terminal device and the network device, the terminal device is in the RRC_IDLE state. In the RRC_IDLE state, the terminal device may select a public land mobile network (public land mobile network, PLMN), receive a system message broadcast by the network device, perform cell reselection, and receive a paging message or receive indication information used for paging the terminal device.

### (2) RRC_CONNECTED state

If an RRC connection is established between the terminal device and the network device, the terminal device is in the RRC _CONNECTED state. In the RRC _CONNECTED state, the terminal device may establish a user plane connection and a control plane connection to the network device, to transmit user plane data and control plane signaling.

When the terminal device needs to receive downlink data sent by the network device or send uplink data to the network device, the terminal device needs to enter the RRC connected state. It can be learned from the schematic diagram of a current of an entire system of the terminal device shown in FIG. 4 that, in the RRC connected state, the terminal device continuously receives the downlink data of the network device. As a result, a current of the terminal device increases, and power consumption is high. In addition, in some embodiments, for example, as shown in FIG. 4, in the RRC connected state, the terminal device actually processes a service for a short time, and the terminal device holds a call in remaining time, but does not receive the downlink data. As a result, there is a power consumption waste to some extent. Therefore, in some embodiments, the network device may configure a CDRX mode for the terminal device, so that the terminal device intermittently receives the downlink data, that is, receives the downlink data in a period of time, and does not receive the downlink data in another period of time, thereby reducing power consumption of the terminal device.

However, some network devices support configuring the CDRX mode for the terminal device (which may also mean that the network device supports a CDRX configuration capability, the network device configures CDRX, or the like). In addition, some network devices do not support configuring the CDRX mode for the terminal device (which may also mean that the network device does not support a CDRX configuration capability, the network device does not configure CDRX, or the like).

If the network device supports configuration of the CDRX mode for the terminal device, after establishing the RRC connection to the terminal device, the network device delivers a CDRX parameter (including a CDRX cycle) to the terminal device, and configures a data reception mode of the terminal device as the CDRX mode. In a process in which the network device and the terminal device communicate in the RRC connected state, the terminal device delivers data based on the CDRX parameter, and the terminal device intermittently receives the downlink data of the network device based on the CDRX parameter, to reduce power consumption. However, in the CDRX mode, because the terminal device does not receive data in a period of time, there is usually a specific delay when the terminal device receives data.

If the network device does not support the CDRX configuration capability, in the process in which the network device and the terminal device communicate in the RRC connected state, the network device continuously delivers data, and the terminal device continuously receives the downlink data in a CCRX mode. In this process, power consumption is high, but a delay is low.

One network device usually serves a plurality of (for example, thousands of) terminal devices, and configures a same data reception mode for these terminal devices. Therefore, after a terminal device establishes an RRC connection to a network device, a data reception mode of the terminal device in an RRC connected state is determined. In other words, the data reception mode configured by the network device for the terminal device is usually determined. For example, a network device that supports the CDRX configuration capability configures the CDRX mode for the terminal device, and a network device that does not support the CDRX configuration capability configures the CCRX mode for the terminal device by default.

However, the terminal device processes various communication services. Some services (such as a video call service, a game service, and a live service) have a high delay requirement, and some services (such as a short message service and a web browsing service) have a low delay requirement. If the terminal device always receives data in the determined CCRX mode or CDRX mode, power consumption of the terminal device and delay requirements of different services cannot be considered.

For example, if a primary cell of the terminal device does not support the CDRX configuration capability, the terminal device can only continuously receive the downlink data in the RRC connected state. When the terminal device processes a real-time service such as a video call service, the terminal device can meet a delay requirement of the service without unnecessary power consumption. However, when a foreground service processed by the terminal device is a non-real-time service such as a web browsing service, because the web browsing service does not require the terminal device to receive the downlink data in real time, the terminal device may cause unnecessary power consumption.

In this embodiment, services running on the terminal device include a foreground service and a background service. During running of the foreground service, corresponding service content may be displayed on a screen of the terminal device for a user to view and operate. During running of the background service, the user cannot view or operate corresponding service content. In other words, a foreground application is in an active state activity state in a running process, and a background application is in an inactive state inactivity state in a running process.

For another example, if the primary cell of the terminal device supports the CDRX configuration capability, and the CDRX mode is configured for the terminal device, the terminal device intermittently receives the downlink data. When the foreground service processed by the terminal device is the non-real-time service, for example, the web browsing service, because the web browsing service does not require the terminal device to receive the downlink data in real time, the terminal device meets a delay requirement of the web browsing service, and reduces device power consumption. However, when the foreground service processed by the terminal device is the real-time service that has a high delay requirement, such as a video call service, the terminal device intermittently receives the downlink data in the CDRX mode. This causes a delay increase, and may cause call freezing and the like, thereby affecting call experience of the user.

Therefore, an embodiment of this application provides a cell handover method, and relates to a process in which a terminal device hands over a cell based on a service type of a foreground service (that is, whether the foreground service is a real-time service or a non-real-time service) and a support status of a primary cell and neighboring cells of the primary cell for a CDRX configuration capability. According to the method, the cell can be flexibly handed over, and power consumption of the terminal device and delay requirements of different services can be considered.

In the technical solution provided in this application, the terminal device may hand over a cell on which the terminal device camps when the foreground service remains unchanged but the neighboring cell changes, or may hand over a cell on which the terminal device camps after the service type of the foreground service changes. The two cases are separately described below.

### (I) The foreground service remains unchanged, and the neighboring cell changes.

In a process in which the terminal device communicates with the network device, the terminal device may move (for example, move along with a user), and therefore, a neighboring cell of the terminal device changes. The process includes: When the primary cell remains unchanged, the neighboring cell changes; and after the primary cell changes, the neighboring cell changes.

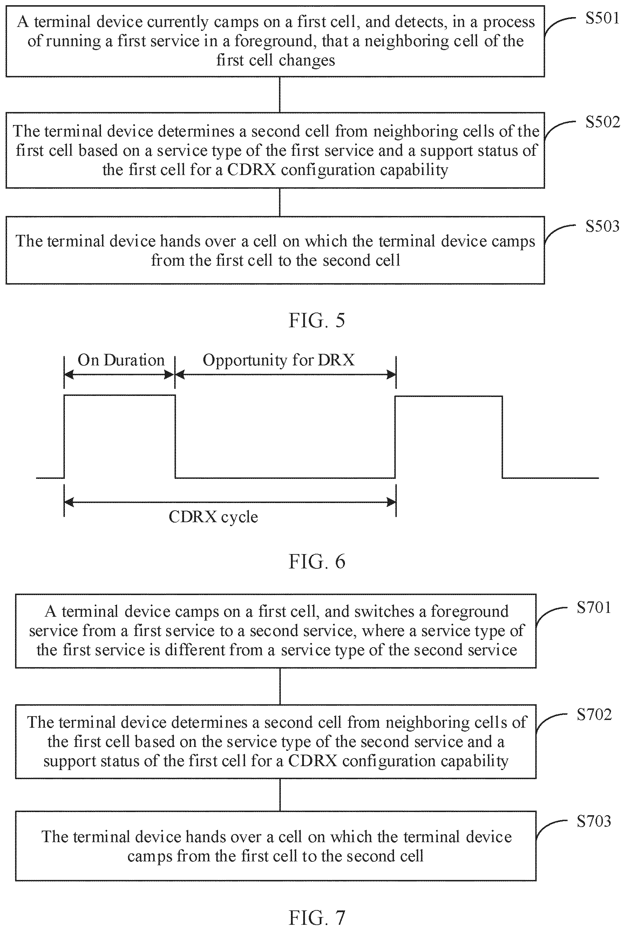

FIG. 5 is a schematic flowchart of a cell handover method according to an embodiment of this application, and relates to a process in which a terminal device hands over a cell based on a service type of a service after a neighboring cell changes. Specifically, the following content is included.

S501: The terminal device currently camps on a first cell, and detects, in a process of running a first service in a foreground, that a neighboring cell of the first cell changes.

That the terminal device currently camps on a first cell may be understood as that a primary cell of the terminal device is the first cell, the terminal device currently accesses a cellular network by using the first cell, or the terminal device can establish an RRC connection to a network device corresponding to the first cell to exchange data.

The terminal device may detect a status of the neighboring cell by using a modem (Modem), including a cell identity (cell identity, CI) of the neighboring cell, a CDRX parameter (including whether a CDRX configuration capability is supported, a CDRX cycle, and the like), RSRP, a signal-to-noise ratio (signal to interference plus noise ratio, SINR), and the like.

After one time of detection, optionally, if a cell identity of a neighboring cell detected by the terminal device this time is different from a cell identity of a neighboring cell detected last time, it is considered that the neighboring cell of the terminal device changes. For example, if cell identities of neighboring cells detected this time are CI2, CI3, and CI4, and cell identities of neighboring cells detected last time are CI1, CI2, and CI3, the terminal device determines that the neighboring cell changes.

Generally, the network device sends a CDRX parameter of a cell to the terminal device only after the terminal device camps on the cell and establishes an RRC connection to the network device. Based on this, in an embodiment of this application, the CDRX parameter of the neighboring cell may be determined in any one of the following manners.

Manner 1: The terminal device determines the CDRX parameter of the neighboring cell based on a local historical record.

In a process in which the terminal device continuously moves along with a user, the terminal device usually automatically hands over, based on values of RSRP of the primary cell and RSRP of the neighboring cell, to a target cell with largest RSRP for camping on. After the terminal device establishes an RRC connection to a network device corresponding to the target cell, if the target cell supports the CDRX configuration capability, the terminal device can obtain a CDRX parameter of the target cell. It may be understood that, as the terminal device moves, the terminal device can sequentially access a plurality of different target cells, and obtain CDRX parameters of these different target cells. After obtaining a CDRX parameter of a cell each time, the terminal device may store a correspondence between a cell identity of the cell and the CDRX parameter, and establish a CDRX parameter correspondence table.

Based on this, after detecting that the neighboring cell changes, the terminal device may query the CDRX parameter correspondence table based on the cell identity of the neighboring cell, to determine the CDRX parameters of the neighboring cells.

Manner 2: The terminal device queries the CDRX parameter of the neighboring cell from a cloud.

A cellular network of an operator usually serves a plurality of terminal devices. After obtaining CDRX parameters of cells connected to these terminal devices, these terminal devices may send a correspondence between a cell identity and a CDRX parameter to a cloud server for storage, to form a CDRX parameter correspondence table. It may be understood that because these terminal devices are widely distributed, the cloud server may obtain CDRX parameters of most cells of the operator.

Based on this, after detecting that the neighboring cell changes, the terminal device may query the CDRX parameter correspondence table from the cloud server based on the cell identity of the neighboring cell, to obtain the CDRX parameters of the neighboring cells. Alternatively, the terminal device may locally download all content of the CDRX parameter correspondence table, or a part related to an area in which the terminal device is located in the CDRX parameter correspondence table. After detecting that the neighboring cell changes, the terminal device may query the CDRX parameter correspondence table based on the cell identity of the neighboring cell, to determine the CDRX parameters of the neighboring cells.

It should be noted that, if the terminal device cannot determine a CDRX parameter of a neighboring cell, the terminal device does not determine a second cell based on the neighboring cell in a subsequent process.

S502: The terminal device determines the second cell from the neighboring cells of the first cell based on a service type of the first service and a support status of the first cell for the CDRX configuration capability.

In this embodiment, the service type includes a real-time service and a non-real-time service. In embodiments of this application, a cellular communication service having a high delay requirement (for example, a delay is less than or equal to a delay threshold) is referred to as a real-time service, and the real-time service may be a video call service, a live service, a game service, or the like; and a cellular communication service having a low delay requirement (for example, a delay is higher than a delay threshold) is referred to as a non-real-time service, and the non-real-time service may be a short message service, a web browsing service, or the like.

In this embodiment, the first service running in the foreground of the terminal device may be the non-real-time service, or may be the real-time service. The following separately describes a process of determining the second cell for the two cases.

### (1) The first service is the non-real-time service.

The non-real-time service usually has a low delay requirement. From a perspective of reducing device power consumption, in a process of processing the non-real-time service, the terminal device may preferentially use a CDRX mode for receiving data delivered by the network device. Based on this, when processing the non-real-time service, the terminal device may choose to camp on a cell that supports the CDRX configuration capability, thereby reducing power consumption of the terminal device while meeting a delay requirement of the non-real-time service.

In a possible implementation, after detecting that the neighboring cell changes, the terminal device may first determine whether the first cell supports the CDRX configuration capability, and accordingly determine whether the second cell needs to be determined from the neighboring cells.

If the first cell supports the CDRX configuration capability, it indicates that when the terminal device camps on the first cell, the terminal device intermittently receives, in the CDRX mode, downlink data delivered by the network device, and power consumption of the terminal device is low during receiving. Therefore, the terminal device does not need to select, from the neighboring cells of the first cell, another cell that supports the CDRX configuration capability, that is, does not need to determine the second cell from the neighboring cells.

Optionally, when the first cell supports the CDRX configuration capability, the terminal device may further determine whether a CDRX cycle of the first cell is greater than a delay requirement of the first service. If the CDRX cycle of the first cell is less than or equal to the delay requirement of the first service, the second cell is no longer reselected from the neighboring cells. If the CDRX cycle of the first cell is greater than the service requirement of the first service, the second cell is selected from the neighboring cells, where a CDRX cycle of the second cell is less than or equal to the delay requirement of the first service.

If the first cell on which the terminal device camps does not support the CDRX configuration capability, the terminal device usually continuously receives the downlink data of the network device in a CCRX mode, and power consumption is high during receiving. To reduce power consumption of the terminal device, a neighboring cell (that is, the second cell) that supports the CDRX configuration capability may be selected from the neighboring cells of the first cell, so that the terminal device receives, in the CDRX mode, data delivered by the network device, thereby reducing power consumption of the terminal device while meeting a delay requirement of the non-real-time service.

Optionally, when selecting the second cell from the neighboring cells of the first cell, the terminal device may select, from the neighboring cells of the first cell based on the CDRX cycle, the second cell that supports the CDRX configuration function.

Refer to FIG. 6. A CDRX cycle (CDRX cycle) includes "On Duration" (that is, an active period) and "Opportunity for DRX" (that is, a sleep period). Within the "On Duration", the terminal device receives downlink service data based on information received on a physical downlink control channel (physical downlink control channel, PDCCH). Within the "Opportunity for CDRX", the terminal device disables a receiving circuit and does not receive the downlink data, to reduce power consumption.

A ratio of the active period to the sleep period in the CDRX cycle is configurable. In different CDRX cycles, the "On Duration" (that is, the active periods) is the same, and the "Opportunity for DRX" (that is, the sleep periods) are different. Therefore, it may be understood that a longer CDRX cycle indicates a longer sleep period, and on the contrary, a shorter CDRX cycle indicates a shorter sleep period. Same CDRX cycles specifically mean that in the CDRX cycles, the active periods are the same, and the sleep periods are the same.

In some embodiments, two CDRX cycles may be set for one cell, which are respectively a long CDRX cycle (long DRX cycle) and a short CDRX cycle (short DRX cycle). Within the long CDRX cycle and the short CDRX cycle, the active periods are the same, but the sleep periods are different. Therefore, in the short CDRX cycle, the terminal device sleeps only for a short time after the active period ends, to receive the downlink data in time, thereby reducing a delay in a service processing process. However, in the long CDRX cycle, compared with the short CDRX cycle, the terminal device needs to sleep for a long time after the active period ends. Therefore, a delay in a service processing process is high, but power consumption is low. Specific values of the long CDRX cycle and the short CDRX cycle are configurable. For example, the long CDRX cycle may be 80 ms, and the short CDRX cycle may be 20 ms. Alternatively, the long CDRX cycle may be 60 ms, and the short CDRX cycle may be 20 ms.

In the RRC connected state, the network device and the terminal device may selectively use the long CDRX cycle and the short CDRX cycle based on a specific service processing process. For example, when the terminal device processes a voice over internet protocol (Voice over Internet Protocol, VOIP) service, the network device may send the downlink data to the terminal device based on the short CDRX cycle, and the terminal device receives the downlink data based on the short CDRX cycle, to reduce a delay. However, in a long silent period during a voice call, the network device may deliver data to the terminal device based on the long CDRX cycle, and the terminal device receives the downlink data based on the long CDRX cycle, to reduce power consumption.

Based on the foregoing description, optionally, when the first service of the terminal device (that is, the foreground service of the terminal device) is the non-real-time service, because the terminal device actually processes a service for a short time in the RRC connected state, the terminal device receives the downlink data based on the long CDRX cycle in most cases. Therefore, the terminal device may select the second cell based on the long CDRX cycle, for example, select a neighboring cell with a longer long CDRX cycle as the second cell, so as to reduce power consumption of the terminal device as much as possible. Certainly, in some embodiments, the terminal device may alternatively select the second cell from the neighboring cell based on the short CDRX cycle. This is not limited in this embodiment.

In addition, different non-real-time services have different delay requirements. To consider both the delay requirement of the non-real-time service and the power consumption of the terminal device, the terminal device may screen, based on the delay requirement of the service, a cell whose CDRX cycle (for example, the long CDRX cycle) meets a condition, to determine the second cell. For example, a delay requirement of a web browsing service is 500 ms. The terminal device may select, from the neighboring cells, a second cell whose long CDRX cycle is about 500 ms (for example, between 450 ms and 550 ms, or between 480 ms and 520 ms).

### (2) The first service is the real-time service.

The real-time service usually has a high delay requirement. To meet the delay requirement of the service, in this embodiment, the terminal device may receive the downlink data of the network device in the CCRX mode. Based on this, the terminal device may choose to camp on a cell that does not support the CDRX configuration capability.

In a possible implementation, after detecting that the neighboring cell changes, the terminal device may first determine whether the first cell supports the CDRX configuration capability, and accordingly determine whether the second cell needs to be determined from the neighboring cells.

If the first cell supports the CDRX configuration capability, it indicates that when camping on the first cell, the terminal device intermittently receives, in the CDRX mode, the downlink data delivered by the network device. However, because the first service is the real-time service, a delay for receiving data in the CDRX mode is high, and a delay requirement of the real-time service cannot be met. Consequently, service freezing may be caused, and user experience is poor. For example, when the first service running in the foreground of the terminal device is a video call service, after the neighboring cell of the terminal device changes, if the first cell on which the terminal device currently camps supports the CDRX configuration capability, a delay is high when the terminal device intermittently receives the downlink data of the network device in the CDRX mode. Consequently, video freezing or unclearness is caused. Therefore, the terminal device may select, from the neighboring cells of the first cell, a neighboring cell (that is, the second cell) that does not support the CDRX configuration capability, so that the terminal device continuously receives, in the CCRX mode, data delivered by the network device, thereby reducing a delay.

Optionally, when the first service is the real-time service, if the first cell on which the terminal device currently camps supports the CDRX configuration capability, all neighboring cells of the first cell also support the CDRX configuration capability, and the CDRX cycle of the first cell is greater than the service requirement of the first service, the terminal device may also determine CDRX cycles of the neighboring cells, and select a neighboring cell whose CDRX cycle is less than the delay requirement of the first service as the second cell. According to the method provided in this embodiment, the terminal device can reduce a delay in a process of processing the real-time service as much as possible, which helps improve user experience.

Alternatively, when the first service is the real-time service, if the first cell on which the terminal device currently camps supports the CDRX configuration capability, all neighboring cells of the first cell also support the CDRX configuration capability, and the CDRX cycle of the first cell is greater than the delay requirement of the first service, the terminal device may also determine CDRX cycles of the neighboring cells and a delay requirement of the foreground service, and select, from these neighboring cells, a cell whose CDRX cycle is close to the delay requirement as the second cell. For example, a delay requirement of a live service is 80 ms. The terminal device may select, from the neighboring cells of the first cell, a cell whose CDRX cycle is about 80 ms (for example, between 60 ms and 100 ms) as the second cell. According to the method provided in this embodiment, the terminal device can consider both device power consumption and the delay requirement of the foreground service, and can further consider user experience while saving device power.

If the first cell does not support the CDRX configuration capability, it indicates that when camping on the first cell, the terminal device continuously receives, in the CCRX mode, the downlink data delivered by the network device, and a data receiving delay is comparatively low, so that the delay requirement of the real-time service can be met. Therefore, the terminal device does not need to select, from the neighboring cells of the first cell, the neighboring cell (that is, the second cell) that does not support the CDRX configuration capability.

It should be noted that, in the foregoing embodiment, when the foreground service is the real-time service, the second cell selected by the terminal device does not support the CDRX configuration function. In other words, the second cell has no CDRX cycle.

S503: The terminal device hands over a cell on which the terminal device camps from the first cell to the second cell.

In the RRC connected state, after finding a plurality of cells and determining that the target cell is the second cell, the terminal device modifies RSRP of all remaining cells to be less than RSRP of the second cell. Then, the RSRP of the second cell and the modified RSRP of the remaining cells are reported to the network device. After receiving the RSRP of these cells, the network device indicates the terminal device to connect to a cell (that is, the second cell) with largest RSRP, so that the terminal device is handed over from the first cell to the second cell in the RRC connected state.

It should be noted that one network device may correspond to one cell, or may correspond to a plurality of cells, and support statuses of the plurality of cells for the CDRX configuration capability may be the same or may be different. In other words, all of the plurality of cells corresponding to one network device may support the CDRX configuration capability, and CDRX parameters may be configured by the plurality of cells. Alternatively, all of the cells may not support the CDRX configuration capability. Alternatively, some of the cells may support the CDRX configuration capability, and some of the cells do not support the CDRX configuration capability. Therefore, the first cell and the second cell may correspond to a same network device, or may correspond to different network devices.

When the first cell and the second cell correspond to a same network device, the terminal device does not need to perform handover on the network device when handing over the cell on which the terminal device camps from the first cell to the second cell. When the first cell and the second cell correspond to different network devices, the terminal device needs to perform handover between the network devices when handing over the cell on which the terminal device camps from the first cell to the second cell.

In conclusion, in a process of processing the foreground service of the terminal device, after the neighboring cell changes, the terminal device may comprehensively select, from the primary cell and the neighboring cell based on the service type of the foreground service and support statuses of the primary cell and the neighboring cell for the CDRX configuration capability, a cell suitable for a current service for handover. According to the method, the cell can be flexibly handed over when power consumption of the terminal device and delay requirements of different services are considered.

In addition, in some other embodiments, because there are usually more non-real-time services of the terminal device than the real-time services, when no communication service runs in the foreground of the terminal device, or when no RRC connection is established between the terminal device and the network device, or when the terminal device is in an RRC idle state, after the neighboring cell of the terminal device changes, the terminal device may select, from the neighboring cells, a second cell that supports the CDRX configuration capability for camping on in advance, to prepare for subsequent processing of the non-real-time service, thereby reducing power consumption of the terminal device.

### (II) The service type of the foreground service of the terminal device changes.

FIG. 7 is a schematic flowchart of a cell handover method according to another embodiment of this application, and relates to a process in which the terminal device hands over a cell based on a changed service type of the foreground service after the service type of the foreground service changes. Specifically, the following content is included.

S701: The terminal device camps on a first cell, and switches the foreground service from a first service to a second service, where a service type of the first service is different from a service type of the second service.

That the foreground service of the terminal device is switched from a first service to a second service includes the following cases.
Case 1: The foreground service of the terminal device is switched from the real-time service to the non-real-time service. In other words, the first service is the real-time service, and the second service is the non-real-time service. For example, the foreground service of the terminal device is switched from a game service to a short message service, or is switched from a live service to a web browsing service.
Case 2: The foreground service of the terminal device is switched from the non-real-time service to the real-time service. In other words, the first service is the non-real-time service, and the second service is the real-time service. For example, the foreground service of the terminal device is switched from a web browsing service to a video live service, or is switched from a short message service to a video call service.
Case 3: The foreground of the terminal device is switched from a no-service state (that is, a cellular communication service) to processing the non-real-time service. In other words, the first service is null, and the second service is the non-real-time service. For example, when the terminal device is in a sleep state or when the terminal device displays a home screen interface, the terminal device switches to displaying a web page according to a user instruction.
Case 4: The foreground of the terminal device is switched from a no-service state (that is, a cellular communication service) to processing the real-time service. In other words, the first service is null, and the second service is the real-time service. For example, when the terminal device is in a sleep state or when the terminal device displays a home screen interface, the terminal device receives a video call.

S702: The terminal device determines the second cell from the neighboring cells of the first cell based on the service type of the second service and a support status of the first cell for the CDRX configuration capability.

For Case 1, the first service is the real-time service, and the second service is the non-real-time service.

After the foreground service of the terminal device is switched from the real-time service to the non-real-time service, a delay requirement of the foreground service is reduced. From a perspective of reducing device power consumption, the terminal device may choose to intermittently receive, in the CDRX mode, data delivered by the network device, to save device power. Therefore, the terminal device may choose to camp on a second cell that supports the CDRX configuration capability.

In a possible implementation, after detecting that the foreground service is switched from the real-time service to the non-real-time service, the terminal device may first determine whether the first cell supports the CDRX configuration capability, and accordingly determine whether to determine the second cell from the neighboring cell.

If the first cell supports the CDRX configuration capability, it indicates that when camping on the first cell, the terminal device intermittently receives, in the CDRX mode, the downlink data delivered by the network device. Power consumption is usually low in a process in which the terminal device receives data. Therefore, the terminal device does not need to select, from the neighboring cells of the first cell, another cell that supports the CDRX configuration capability, that is, the terminal device does not need to determine, from the neighboring cells, the second cell that supports the CDRX configuration capability.

Optionally, when the first cell supports the CDRX configuration capability, the terminal device may further determine whether the CDRX cycle of the first cell is greater than a delay requirement of the second service. If the CDRX cycle of the first cell is less than or equal to the delay requirement of the second service, the second cell is no longer reselected from the neighboring cells. If the CDRX cycle of the first cell is greater than the delay requirement of the second service, the second cell that supports the CDRX configuration capability and whose CDRX cycle is less than the delay requirement of the second service is selected from the neighboring cells.

If the first cell on which the terminal device camps does not support the CDRX configuration capability, the terminal device usually continuously receives the downlink data of the network device in the CCRX mode, and power consumption is usually high during receiving. To reduce power consumption of the terminal device, a neighboring cell (that is, the second cell) that supports the CDRX configuration capability may be selected from the neighboring cells of the first cell, so that the terminal device receives, in the CDRX mode, data delivered by the network device, thereby reducing power consumption of the terminal device while meeting a delay requirement of the non-real-time service.

Optionally, in the foregoing embodiment, in a case in which the foreground service (that is, the second service) is the non-real-time service, when selecting the second cell from the neighboring cells of the first cell, the terminal device may select the second cell from these neighboring cells based on the CDRX cycles of the neighboring cells of the first cell. For details, refer to the related descriptions in S502. Details are not described herein again in this embodiment.

For Case 2, the first service is the non-real-time service, and the second service is the real-time service.

After the foreground service of the terminal device is switched from the non-real-time service to the real-time service, the foreground service has a higher delay requirement. From a perspective of preferentially meeting the delay requirement of the foreground service and ensuring normal running of the foreground service, the terminal device may choose to continuously receive, in the CCRX mode, data delivered by the network device. Therefore, the terminal device may choose to camp on a cell that does not support the CDRX configuration capability.

In a possible implementation, after detecting that the foreground service is switched from the non-real-time service to the real-time service, the terminal device may first determine whether the first cell supports the CDRX configuration capability, and accordingly determine whether to determine the second cell from the neighboring cell.

If the first cell supports the CDRX configuration capability, it indicates that when camping on the first cell, the terminal device intermittently receives, in the CDRX mode, the downlink data delivered by the network device. A delay is usually high in a process in which the terminal device receives data. However, because the second service currently running is the real-time service, a delay is high, which may cause service freezing and poor user experience. To reduce a delay of the terminal device, the terminal device may select, from the neighboring cells of the first cell, a neighboring cell (that is, the second cell) that does not support the CDRX configuration capability, so that the terminal device receives, in the CCRX mode, data delivered by the network device.

If the first cell does not support the CDRX configuration capability, it indicates that when camping on the first cell, the terminal device continuously receives, in the CCRX mode, the downlink data delivered by the network device, and a data receiving delay is usually low, so that the delay requirement of the real-time service can be met. Therefore, the terminal device does not need to select, from the neighboring cells of the first cell, the neighboring cell (that is, the second cell) that does not support the CDRX configuration capability.

It should be noted that when the foreground service is the real-time service, the second cell selected by the terminal device does not support the CDRX configuration function. In other words, the second cell has no CDRX cycle.

For Case 3, the first service is null, and the second service is the non-real-time service. With reference to the cell selection method for Case 1, when the first cell does not support the CDRX configuration capability, the terminal device may select, from the neighboring cells, a cell that supports the CDRX configuration capability for camping on, to receive the downlink data of the network device in the CDRX mode, thereby reducing device power consumption while meeting a service delay requirement. When the first cell supports the CDRX configuration capability, cell selection and handover are not performed, so that current power consumption of the terminal device does not increase.

For Case 4, the first service is null, and the second service is the real-time service. With reference to the cell selection method for Case 2, when the first cell supports the CDRX configuration capability, the terminal device may select, from the neighboring cells, a cell that does not support the CDRX configuration capability for camping on, to receive the downlink data of the network device in the CCRX mode, thereby meeting a service delay requirement. When the first cell does not support the CDRX configuration capability, cell selection and handover are not performed, so that a current delay of the terminal device does not increase.

S703: The terminal device hands over a cell on which the terminal device camps from the first cell to the second cell.

For details of S703, refer to the related descriptions of S503. Details are not described herein again in this embodiment of this application.

In conclusion, after the service type of the foreground service of the terminal device changes, the terminal device may comprehensively select, from the primary cell and the neighboring cell based on the service type of the current service and support statuses of the primary cell and the neighboring cell for the CDRX configuration capability, a cell suitable for the current service for handover. According to the method, the cell can be flexibly handed over when power consumption of the terminal device and delay requirements of different services are considered.

The following separately describes an example of a process in which the terminal device selects the second cell from the neighboring cell in two cases: the second cell supports the CDRX configuration capability, and the second cell does not support the CDRX configuration capability.

### (1) The second cell supports the CDRX configuration capability.

When the second cell supports the CDRX configuration capability, in a process of determining the second cell, the terminal device may consider at least one of parameters such as RSRP, an SINR, and a CDRX cycle of the neighboring cell. To be specific, the terminal device may comprehensively determine the second cell from the neighboring cell based on at least one of a power screening condition, a signal-to-noise ratio screening condition, and a cycle screening condition. For example, the terminal device may comprehensively determine the second cell from the neighboring cell based on only the cycle screening condition. Alternatively, the second cell is comprehensively determined from the neighboring cells based on the power screening condition, the signal-to-noise ratio screening condition, and the cycle screening condition.

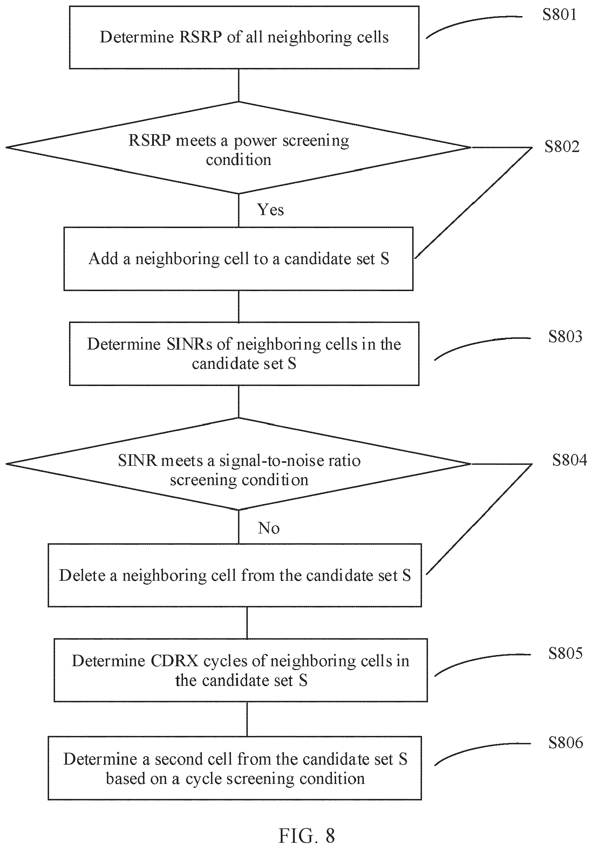

When the terminal device comprehensively determines the second cell from the neighboring cell based on a plurality of screening conditions, an execution sequence of the plurality of screening conditions is not limited in this embodiment. For example, refer to FIG. 8. When the terminal device comprehensively determines the second cell from the neighboring cell based on three screening conditions: the power screening condition, the signal-to-noise ratio screening condition, and the cycle screening condition, the terminal device may comprehensively determine the second cell from the neighboring cell based on the power screening condition, the signal-to-noise ratio screening condition, and the cycle screening condition in sequence. Alternatively, the terminal device may comprehensively determine the second cell from the neighboring cell based on the signal-to-noise ratio screening condition, the power screening condition, and the cycle screening condition in sequence.

FIG. 8 is a schematic diagram of a process of determining a second cell according to an embodiment of this application, and relates to a process in which the terminal device determines a second cell that supports a CDRX configuration capability. Specifically, the following content is included.

S801: The terminal device determines RSRP of all neighboring cells.

S802: The terminal device adds a cell whose RSRP meets the power screening condition to a candidate set S.

In some embodiments, that the RSRP meets the power screening condition includes that the RSRP meets a first power screening condition, and the first power screening condition is that the RSRP is greater than or equal to an RSRP threshold. For example, the RSRP threshold may be -95 dBm (decibel milliwatt), -100 dBm, or the like. This is not limited in this embodiment.

In some other embodiments, that the RSRP meets the power screening condition includes that the RSRP meets a second power screening condition, and the second power screening condition is |RSRP_{servingcel} - RSRP (*i*)|<*δ*ₜₕ, where RSRP_{servingcel} is reference signal received power of the first cell of the terminal device, RSRP (*i*) is reference signal received power of the neighboring cell, and *δ*ₜₕ is a reference signal received power difference measurement threshold. Because the first cell on which the terminal device camps is usually a cell with high RSRP, when the RSRP meets the second power screening condition, it indicates that the RSRP is equivalent to RSRP_{servingcel} , and the first cell can maintain normal running of a current service of the terminal device. For example, when RSRP (1) of the neighboring cell CI1 satisfies |RSRP_{servingcel} -RSRP (1)|<*δ*ₜₕ , it indicates that the RSRP (1) is equivalent to RSRP_{servingcel}, and the CI1 can maintain normal running of the foreground service of the terminal device.

It should be understood that, after filtering by using the power screening condition, reference signal received strength of all neighboring cells in the candidate set S meets a criterion, and these candidate neighboring cells can ensure that the terminal device can normally process a service after performing cell handover.

After the terminal device performs S801 and S802, if the candidate set S is empty, that is, there is no cell whose reference signal received strength meets the criterion, the second cell fails to be determined. If the candidate set S is not empty, that is, there is a cell whose reference signal received strength meets the criterion, the terminal device performs subsequent steps S803 and S804.

S803: The terminal device obtains SINRs of all neighboring cells in the candidate set S.

S804: The terminal device deletes a cell that does not meet the signal-to-noise ratio screening condition from the candidate set S, and updates the candidate set S.

For example, the signal-to-noise ratio screening condition may be SINR (*i*) >*δ*ₒₚ, where SINR (*i*) is a signal-to-noise ratio of each neighboring cell in the candidate set S, and *δ*ₒₚ is a signal-to-noise ratio threshold. If the SINR of the neighboring cell meets the signal-to-noise ratio screening condition, it indicates that the neighboring cell has good data transmission quality, and less noise is generated during transmission.

Alternatively, the signal-to-noise ratio screening condition may be |SINR_{servingcel} - SINR (*i*)|<*δ*_{SINR}, where SINR_{servingcel} is a signal-to-noise ratio of the first cell of the terminal device, SINR (*i*) is a signal-to-noise ratio of the neighboring cell, and *δ*_{SINR} is a signal-to-noise ratio difference measurement threshold. Because the first cell on which the terminal device camps is usually a cell with a high signal-to-noise ratio, when the signal-to-noise ratio meets the signal-to-noise ratio screening condition, it indicates that the SINR is equivalent to SINR_{servingcel}, and the first cell can maintain normal running of the foreground service of the terminal device. For example, when an SINR (1) of the neighboring cell CI1 satisfies |SINR_{servingcel} - SINR (1)|< *δ*_{SINR} , it indicates that the SINR (1) is equivalent to SINR_{servingcel}, and the CI1 can maintain normal running of the current service of the terminal device.

After the terminal device performs S803 and S804, if the candidate set S is empty, that is, there is no cell whose signal-to-noise ratio meets a criterion, the second cell fails to be determined. If the candidate set S is not empty, that is, there is a cell whose signal-to-noise ratio meets the criterion, subsequent steps S805 and S806 are performed.

S805: The terminal device obtains CDRX cycles of all cells in an updated candidate set S.

S806: The terminal device determines, as the second cell, a cell that meets the cycle screening condition in the updated candidate set S.

In some embodiments, the cycle screening condition is a first cycle screening condition, and the first cycle screening condition is specifically: The CDRX cycle is less than a time threshold. A cell with a long sleep period can be filtered out based on the first cycle screening condition, to avoid an excessively high delay, which affects normal running of a service. If there are a plurality of cells that meet the first cycle screening condition in the candidate set S, the terminal device may determine, as the second cell, any cell that meets the first cycle screening condition, or may determine, as the second cell, a cell, with a longest CDRX cycle, in all cells meeting the first cycle screening condition.

In some other embodiments, the cycle screening condition is a second cycle screening condition, and the second cycle screening condition is that the CDRX cycle is a maximum value in T(i), where T(i) is the CDRX cycles of the cells in the updated candidate set S. In other words, the terminal device determines a cell with a longest CDRX cycle in the updated candidate set S as the second cell. According to the method provided in an embodiment of this application, power consumption of the terminal device can be reduced to a large extent, and use duration of the terminal device (for example, a watch phone or a smartwatch) can be prolonged.

In still some other embodiments, the cycle screening condition is a third cycle screening condition, and the third cycle screening condition is that the CDRX cycle is a minimum value in T(i), where T(i) is the CDRX cycles of the cells in the updated candidate set S. In other words, the terminal device determines a cell with a shortest CDRX cycle in the updated candidate set S as the second cell. According to the method provided in an embodiment of this application, power consumption can be reduced to some extent, and service data can be updated in time.

In yet some other embodiments, the cycle screening condition is a fourth cycle screening condition, and the fourth cycle screening condition is that a correspondence between a delay requirement of a service and the CDRX cycle is met.

Optionally, when the foreground service is the non-real-time service, because the non-real-time service does not have a high delay requirement, from a perspective of reducing device power consumption, the terminal device may select, from the updated candidate set S based on the long CDRX cycle in the CDRX cycle, the first cell that meets the cycle screening condition. To be specific, in the foregoing cycle screening conditions, the CDRX cycle is a long CDRX cycle.

When the foreground service is the non-real-time service, and all neighboring cells of the first cell support the CDRX configuration function, the terminal device may determine, from the updated candidate set S, a cell with a longest long CDRX cycle as the second cell when determining the second cell from these neighboring cells. If there are a plurality of cells with the longest long CDRX cycle, for example, there are three cells whose long CDRX cycles are all 500 ms in the updated candidate set S, and 500 ms in the updated candidate set S is the longest long CDRX cycle, the terminal device may select, from the plurality of cells with the longest long CDRX cycle, a cell with a shortest short CDRX cycle as the second cell.

### (2) The second cell does not support the CDRX configuration capability.

When the second cell does not support the CDRX configuration capability, in a process of determining the second cell, the terminal device may comprehensively determine the second cell from the neighboring cell based on at least one of the power screening condition and the signal-to-noise ratio screening condition. For example, the terminal device may comprehensively determine the second cell from the neighboring cell based on only the power screening condition. Alternatively, the second cell is comprehensively determined from the neighboring cells based on only the signal-to-noise ratio screening condition. Alternatively, the second cell may be comprehensively determined from the neighboring cells based on both the power screening condition and the signal-to-noise ratio screening condition.

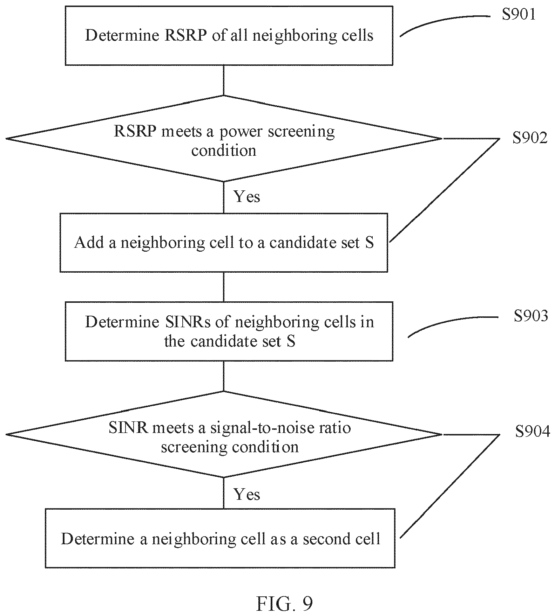

When the terminal device comprehensively determines the second cell from the neighboring cell based on both the power screening condition and the signal-to-noise ratio screening condition, an execution sequence of the two screening conditions is not limited in this embodiment. For example, refer to FIG. 9. The terminal device may comprehensively determine the second cell from the neighboring cell based on the power screening condition and the signal-to-noise ratio screening condition in sequence.

FIG. 9 is a schematic diagram of a process of determining a second cell according to another embodiment of this application, and relates to a process in which the terminal device determines a second cell that does not support a CDRX configuration capability. Specifically, the following content is included.

S901: The terminal device obtains RSRP of all neighboring cells of the first cell.

S902: The terminal device adds a cell whose RSRP meets the power screening condition to a candidate set S.

In this embodiment, for specific content of S901 and S902, refer to the related descriptions of S801 and S802. Details are not described herein again in this embodiment.

After the terminal device performs S901 and S902, if the candidate set S is empty, that is, there is no cell whose reference signal received power meets a criterion, the second cell fails to be determined. If the candidate set S is not empty, that is, there is a cell whose reference signal received power meets the criterion, subsequent steps S903 and S904 are performed.

S903: The terminal device obtains SINRs of all neighboring cells in the candidate set S.

S904: The terminal device determines, as the second cell, a cell that meets the signal-to-noise ratio screening condition in the candidate set S.

In some embodiments, the signal-to-noise ratio screening condition may be SINR (*i*) >*δ*ₒₚ,where SINR (*i*) is a signal-to-noise ratio of each neighboring cell in the candidate set S, and *δ*ₒₚ is a signal-to-noise ratio threshold. If the SINR of the neighboring cell meets the signal-to-noise ratio screening condition, it indicates that the neighboring cell has good data transmission quality, and less noise is generated during transmission.

In some embodiments, the terminal device may determine a cell with a largest signal-to-noise ratio in the candidate set S as the second cell, to ensure data transmission quality.

It should be noted that the cell handover method provided in embodiments of this application is applicable to a scenario in which one subscriber identity module (subscriber identity module, SIM) card is installed on the terminal device, and is also applicable to a scenario in which a plurality of subscriber identity module SIM cards are installed on the terminal device.

When only one SIM card is installed on the terminal device, both the first cell on which the terminal device currently camps and the second cell to which the terminal device is to be handed over belong to a same operator. Therefore, in a process in which the terminal device hands over the cell on which the terminal device camps from the first cell to the second cell, the terminal device does not need to perform handover between operators.

When a plurality of SIM cards belonging to different operators are installed on the terminal device, the terminal device simultaneously camps on a plurality of different primary cells. For example, both a first SIM card of an operator A and a second SIM card of an operator B are installed on the terminal device. The terminal device simultaneously camps on a cell A of the operator A and a cell B of the operator B. In this scenario, the first cell on which the terminal device camps is a cell (for example, the cell A) used by the terminal device to process the foreground service. In this case, the neighboring cells of the first cell may include a neighboring cell of the cell A within a range of operator A, a neighboring cell of the cell B within a range of operator B, and the cell B. Therefore, the second cell determined by the terminal device and the first cell may belong to a same operator, or may belong to different operators.

When the first cell and the second cell belong to different operators, the second cell determined by the terminal device may be a primary cell on which the other SIM card camps, or may be a neighboring cell of the primary cell. Details are as follows.

When the second cell is a primary cell (for example, the cell B) on which the terminal device camps, and the terminal device is handed over from the first cell (for example, the cell A) to the second cell (for example, the cell B), the terminal device locally performs SIM card switching. For example, the terminal device performs switching from the first SIM card corresponding to the cell A to the second SIM card corresponding to the cell B.

When the second cell is not the primary cell on which the terminal device camps, and the terminal device is handed over from the first cell to the second cell, the terminal device needs to perform cell handover between different operators.

In a handover process, the terminal device first needs to perform SIM card switching. For example, the first cell corresponds to the first SIM card, and the second cell corresponds to the second SIM card. When the terminal device is handed over from the first cell to the second cell, the terminal device needs to first switch a SIM card used for the foreground service from the first SIM card to the second SIM card. Then, the terminal device accesses the second cell based on whether the second SIM card is in the RRC idle state or the RRC connected state. Details are as follows.

When the second SIM card is in the RRC idle state, a related communication protocol specifies that after the terminal device finds a plurality of cells, the terminal device is connected to a cell with largest RSRP by default. Therefore, after determining that the target cell is the second cell, the terminal device may modify RSRP of all remaining cells to be less than RSRP of the second cell. In this case, for the terminal device, the second cell is nominally the cell with largest RSRP, and the terminal device may be handed over to the second cell according to an existing communication protocol.

When the second SIM card is in the RRC connected state, the terminal device may modify RSRP of remaining cells other than the second cell in the found cells to be less than the RSRP of the second cell. Then, the RSRP of the second cell and the modified RSRP of the remaining cells are reported to the network device. After receiving the RSRP of these cells, the network device indicates the terminal device to connect to a cell (that is, the second cell) with largest RSRP, so that the terminal device is handed over from the first cell to the second cell in the RRC connected state.

It should be understood that sequence numbers of the steps do not mean an execution sequence in the foregoing embodiments. The execution sequence of the processes should be determined based on functions and internal logic of the processes, and should not constitute any limitation on the implementation processes of the embodiments of this application.

Based on the cell handover method provided in the foregoing embodiments, this embodiment further provides the following content.

An embodiment of this application further provides a cell selection apparatus. The apparatus is used in a terminal device, the terminal device accesses a first cell, and the apparatus includes a detection module, a determining module, and a handover module.

The determining module is configured to determine a second cell from neighboring cells of the first cell based on a service type of a foreground service of the terminal device and a support status of the first cell for a CDRX configuration capability, where the service type includes a real-time service and a non-real-time service.

The handover module is configured to hand over a cell accessed by the terminal device from the first cell to the second cell.

Optionally, the apparatus further includes the detection module, and the detection module is configured to detect a first trigger event.

That the determining module is configured to determine a second cell from neighboring cells of the first cell based on a service type of a foreground service of the terminal device and a support status of the first cell for a CDRX configuration capability specifically includes: The determining module is configured to: after the detection module detects the first trigger event, determine the second cell from the neighboring cells of the first cell based on the service type of the foreground service of the terminal device and the support status of the first cell for the CDRX configuration capability.

Optionally, the first trigger event is that the terminal device detects, in a process of processing the foreground service, that a neighboring cell of the first cell changes; a foreground of the terminal device switches from a no-service state to a state of processing the foreground service; or a foreground of the terminal device switches from processing a first service to processing a second service, and a service type of the first service is different from a service type of the second service.

Optionally, that the determining module is configured to: after the first trigger event occurs, determine the second cell from the neighboring cells of the first cell based on the service type of the foreground service of the terminal device and the support status of the first cell for the CDRX configuration capability specifically includes:

The determining module is configured to: when the service type of the foreground service is the real-time service, and the first cell supports the CDRX configuration capability, determine the second cell from the neighboring cells of the first cell, where the second cell does not support the CDRX configuration capability.

Alternatively, the determining module is configured to: when the service type of the foreground service is the real-time service, and the first cell and the neighboring cells of the first cell all support the CDRX configuration capability, determine the second cell from the neighboring cells of the first cell, where a CDRX cycle of the second cell is less than a CDRX cycle of the first cell.

Alternatively, the determining module is configured to: when the foreground service is the non-real-time service, and the first cell does not support the CDRX configuration capability, determine the second cell from the neighboring cells of the first cell, where the second cell supports the CDRX configuration capability.

Alternatively, the determining module is configured to: when the service type of the foreground service is the non-real-time service, and the first cell supports the CDRX configuration capability, determine the second cell from the neighboring cells of the first cell, where the second cell supports the CDRX configuration capability, and a CDRX cycle of the second cell is greater than a CDRX cycle of the first cell.

Optionally, that the determining module is configured to determine the second cell from the neighboring cells of the first cell, where the second cell does not support the CDRX configuration capability includes: The determining module is configured to determine the second cell from the neighboring cells of the first cell, where the second cell does not support the CDRX configuration capability, and meets a power screening condition and/or a signal-to-noise ratio screening condition.

Optionally, that the determining module is configured to determine the second cell from the neighboring cells of the first cell, where the second cell supports the CDRX configuration capability includes: The determining module is configured to determine the second cell from the neighboring cells of the first cell, where the second cell supports the CDRX configuration capability, and meets at least one of a cycle screening condition, a power screening condition, or a signal-to-noise ratio screening condition.

Optionally, the power screening condition is |RSRP_{servingcel} -RSRP (*i*)|<*δ*ₜₕ, where RSRP_{servingcel} is reference signal received power of the first cell, RSRP (*i*) is reference signal received power of an *i*^{th} neighboring cell of the first cell, and *δ*ₜₕ is a reference signal received power difference measurement threshold. Alternatively, the power screening condition is that RSRP (*i*) is greater than or equal to a reference signal received power threshold.

Optionally, the signal-to-noise ratio screening condition is SINR (*i*) >*δ*ₒₚ , where SINR (*i*) is a signal-to-noise ratio of the *i*^{th} neighboring cell of the first cell, and *δ*ₒₚ is a signal-to-noise ratio threshold. Alternatively, the signal-to-noise ratio screening condition is |SINR_{servingcel} - SINR (*i*)|<*δ*_{SINR}, where SINR_{servingcel} is a signal-to-noise ratio of the first cell, and *δ*_{SINR} is a signal-to-noise ratio difference measurement threshold.

By using the signal-to-noise ratio screening condition, the terminal device may determine a second cell with a high signal-to-noise ratio, to ensure communication quality after the terminal device is handed over from the first cell to the second cell.

Optionally, the cycle screening condition is that the CDRX cycle is less than a time threshold; or the CDRX cycle is a maximum value in CDRX cycles of candidate cells, where the candidate cell includes a neighboring cell that meets the power screening condition and/or the signal-to-noise ratio screening condition. Alternatively, the cycle screening condition is that the CDRX cycle is a minimum value in CDRX cycles of candidate cells; or a correspondence between a delay requirement of the foreground service and the CDRX cycle is met.

Optionally, in the cycle screening condition, the CDRX cycle is a long CDRX cycle.

An embodiment of this application further provides a terminal device. The terminal device is configured to perform the cell handover method shown in the foregoing embodiments.

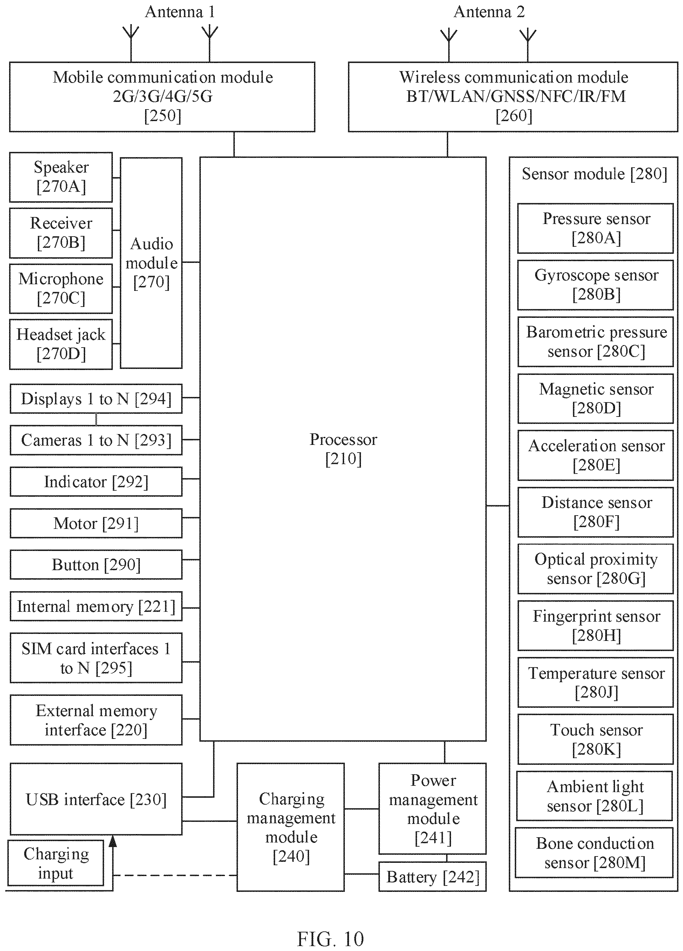

FIG. 10 is a schematic diagram of a structure of a terminal device according to an embodiment of this application. The terminal device may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It can be understood that, a structure illustrated in embodiments of this application does not constitute a specific limitation on the terminal device. In some other embodiments of this application, the terminal device may include more or fewer components than those shown in the figure, or some components may be combined, or some components may be split, or different component arrangements may be used. The components shown in the figure may be implemented by hardware, software, or a combination of software and hardware.

For example, when the terminal device is a tablet computer, the terminal device may include all the components in the figure or may include only some of the components in the figure. For example, when the terminal device is a large-screen device, the terminal device may include all the components in the figure or may include only some of the components in the figure.

When the terminal device is a mobile phone, the terminal device may include the processor 210, the external memory interface 220, the internal memory 221, the universal serial bus (universal serial bus, USB) interface 230, the charging management module 240, the power management module 241, the wireless communication module 260, the audio module 270, the speaker 270A, the receiver 270B, the microphone 270C, the camera 293, and the display 294 in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device. The controller may generate an operation control signal based on instruction operation code and a time sequence signal, to complete control of instruction fetching and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules illustrated in this embodiment of this application is merely an example for description, and does not constitute a limitation on the structure of the terminal device. In some other embodiments of this application, the terminal device may alternatively use an interface connection manner different from that in the foregoing embodiments or a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the terminal device. When charging the battery 242, the charging management module 240 may further supply power to the terminal device by using the power management module 241.

The power management module 241 is configured to connect to the battery 242, the charging management module 240, and the processor 210. The power management module 241 receives an input of the battery 242 and/or the charging management module 240, to supply power to the processor 210, the internal memory 221, an external memory, the display 294, the camera 293, the wireless communication module 260, and the like. The power management module 241 may be further configured to monitor parameters such as a battery capacity, a quantity of battery cycles, and a battery health status (electric leakage and impedance).

In some other embodiments, the power management module 241 may alternatively be disposed in the processor 210. In some other embodiments, the power management module 241 and the charging management module 240 may alternatively be disposed in a same component.

A wireless communication function of the terminal device may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 250 can provide a solution, applied to the terminal device, to wireless communication including 2G/3G/4G/5G or the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1.

In some embodiments, at least some function modules in the mobile communication module 250 may be disposed in the processor 210. In some embodiments, at least some function modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 270A, the receiver 270B, or the like), or displays an image or a video through the display 294. In some embodiments, the modem processor may be an independent component. In some other embodiments, the modem processor may be independent of the processor 210, and is disposed in a same component as the mobile communication module 250 or another function module.

The wireless communication module 260 may provide a solution, applied to the terminal device, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

In some embodiments, the antenna 1 of the terminal device is coupled to the mobile communication module 250, and the antenna 2 is coupled to the wireless communication module 260, so that the terminal device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change displayed information.

The display 294 is configured to display an image, a video, and the like, for example, a teaching video and a user action picture video in embodiments of this application. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device may include one or N displays 294, where N is a positive integer greater than 1.

The terminal device may implement a photographing function by using the ISP, the camera 293, the video codec, the GPU, the display 294, the application processor, and the like.

The external memory interface 220 may be configured to connect to an external storage card, for example, a micro SD card, to extend a storage capability of the terminal device. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The processor 210 runs the instructions stored in the internal memory 221, to implement various function applications and data processing of the terminal device. The internal memory 221 may include a program storage area and a data storage area. The program storage area may store an operating system, an application required by at least one function (for example, a voice playing function or an image playing function), and the like. The data storage area may store data (for example, audio data and a phone book) created when the terminal device is used.

In addition, the internal memory 221 may include a high-speed random access memory, or may include a nonvolatile memory such as at least one disk storage device, a flash memory, or a universal flash storage (universal flash storage, UFS).

The terminal device may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and is also configured to convert an analog audio input into a digital audio signal. The audio module 270 may further be configured to: code and decode the audio signal. In some embodiments, the audio module 270 may be disposed in the processor 210, or some function modules in the audio module 270 are disposed in the processor 210.

The speaker 270A, also referred to as a "horn", is configured to convert an audio electrical signal into a sound signal. The terminal device may be used for listening to music or answering a hands-free call by using the speaker 270A. For example, the speaker may play a comparison analysis result provided in an embodiment of this application.

The receiver 270B, also referred to as an "earpiece", is configured to convert an audio electrical signal into a sound signal. When the terminal device is used for answering a call or listening to voice information, the receiver 270B may be placed close to a human ear to listen to a voice.

The microphone 270C, also referred to as a "mike" or a "mic", is configured to convert a sound signal into an electrical signal. When making a call or sending voice information, the user may make a sound by using a human mouth close to the microphone 270C, and input a sound signal to the microphone 270C. At least one microphone 270C may be disposed in the terminal device. In some other embodiments, two microphones 270C may be disposed in the terminal device, to implement a noise reduction function, in addition to collecting a sound signal. In some other embodiments, three, four, or more microphones 270C may be alternatively disposed in the terminal device, to collect a sound signal and reduce noise. The microphones 270C may further identify a sound source, implement a directional recording function, and the like.

The headset jack 270D is configured to connect to a wired headset. The headset jack 270D may be the USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The button 290 includes a power button, a volume button, or the like. The button 290 may be a mechanical button, or may be a touch button. The terminal device may receive a button input, and generate a button signal input related to a user setting and function control of the terminal device.

The motor 291 may generate a vibration prompt. The motor 291 may be configured to provide an incoming call vibration prompt and a touch vibration feedback. For example, touch operations performed on different applications (for example, photo taking and audio playing) may correspond to different vibration feedback effects. For touch operations performed on different areas of the display 294, the motor 291 may also correspond to different vibration feedback effects. Different application scenarios (for example, a time reminder, information receiving, an alarm clock, and a game) may also correspond to different vibration feedback effects. A touch vibration feedback effect may be further customized.

The indicator 292 may be an indicator light, and may be configured to indicate a charging status and a power change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the terminal device. The terminal device may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. Types of the plurality of cards may be the same or may be different. The SIM card interface 295 is also compatible with different types of SIM cards. The SIM card interface 295 is also compatible with an external storage card. The terminal device interacts with a network by using the SIM card, to implement functions such as a call and data communication. In some embodiments, the terminal device uses an eSIM, that is, an embedded SIM card. The eSIM card may be embedded in the terminal device, and cannot be separated from the terminal device.

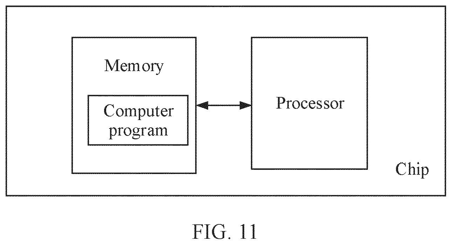

An embodiment of this application further provides a chip. Refer to FIG. 11. The chip includes a processor and a memory. The memory stores a computer program, and when the computer program is executed by the processor, the cell handover method in the foregoing embodiments is implemented.

An embodiment of this application further provides a computer-readable storage medium. The computer-readable storage medium stores a computer program. When the computer program is executed by a processor, the cell handover method provided in the foregoing embodiments is implemented.

An embodiment of this application further provides a computer program product. The program product includes a computer program, and when the computer program is run by a terminal device, the terminal device is enabled to implement the cell handover method provided in the foregoing embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. It is illustrated by way of example, and not limitation, that many forms of RAMs are available, such as a static random access memory (Static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments provided in this application, division into frameworks or modules is merely logical function division and may be other division in actual implementation. For example, a plurality of frameworks or modules may be combined or integrated into another system, or some features may be ignored or not performed.

In addition, functional modules in this application may be integrated into one processing module, or each of the modules may exist alone physically, or two or more modules are integrated into one module. The integrated module may be implemented in a form of hardware, or may be implemented in a form of a software function module.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

Reference to "an embodiment", "some embodiments", or the like described in the specification of this application indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner. The terms "include", "contain", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A cell handover method, applied to a terminal device, wherein the terminal device accesses a first cell, and the method comprises:
determining a second cell from neighboring cells of the first cell based on a service type of a foreground service of the terminal device and a support status of the first cell for a connected discontinuous reception CDRX configuration capability, wherein the service type comprises a real-time service and a non-real-time service; and
handing over a cell accessed by the terminal device from the first cell to the second cell.

2. The method according to claim 1, wherein the determining a second cell from neighboring cells of the first cell based on a service type of a foreground service of the terminal device and a support status of the first cell for a CDRX configuration capability comprises:
after detecting a first trigger event, determining the second cell from the neighboring cells of the first cell based on the service type of the foreground service of the terminal device and the support status of the first cell for the CDRX configuration capability.

3. The method according to claim 2, wherein the first trigger event is that:
the terminal device detects, in a process of processing the foreground service, that a neighboring cell of the first cell changes;
a foreground of the terminal device switches from a no-service state to a state of processing the foreground service; or
a foreground of the terminal device switches from processing a first service to processing a second service, wherein a service type of the first service is different from a service type of the second service.

4. The method according to any one of claims 1 to 3, wherein the determining a second cell from neighboring cells of the first cell based on a service type of a foreground service of the terminal device and a support status of the first cell for a CDRX configuration capability comprises:
if the service type of the foreground service is the real-time service, and the first cell supports the CDRX configuration capability, determining the second cell from the neighboring cells of the first cell, wherein the second cell does not support the CDRX configuration capability.

5. The method according to any one of claims 1 to 3, wherein the determining a second cell from neighboring cells of the first cell based on a service type of a foreground service of the terminal device and a support status of the first cell for a CDRX configuration capability comprises:
if the service type of the foreground service is the real-time service, and the first cell and the neighboring cells of the first cell all support the CDRX configuration capability, determining the second cell from the neighboring cells of the first cell, wherein a CDRX cycle of the second cell is less than a CDRX cycle of the first cell.

6. The method according to any one of claims 1 to 3, wherein the determining a second cell from neighboring cells of the first cell based on a service type of a foreground service of the terminal device and a support status of the first cell for a CDRX configuration capability comprises:
if the service type of the foreground service is the non-real-time service, and the first cell does not support the CDRX configuration capability, determining the second cell from the neighboring cells of the first cell, wherein the second cell supports the CDRX configuration capability.

7. The method according to any one of claims 1 to 3, wherein the determining a second cell from neighboring cells of the first cell based on a service type of a foreground service of the terminal device and a support status of the first cell for a CDRX configuration capability comprises:
if the service type of the foreground service is the non-real-time service, and the first cell supports the CDRX configuration capability, determining the second cell from the neighboring cells of the first cell, wherein the second cell supports the CDRX configuration capability, and a CDRX cycle of the second cell is greater than a CDRX cycle of the first cell.

8. The method according to claim 4, wherein the determining the second cell from the neighboring cells of the first cell, wherein the second cell does not support the CDRX configuration capability comprises:
determining the second cell from the neighboring cells of the first cell, wherein the second cell does not support the CDRX configuration capability, and meets a power screening condition and/or a signal-to-noise ratio screening condition.

9. The method according to any one of claims 5 to 7, wherein the determining the second cell from the neighboring cells of the first cell, wherein the second cell supports the CDRX configuration capability comprises:
determining the second cell from the neighboring cells of the first cell, wherein the second cell supports the CDRX configuration capability, and meets at least one of a cycle screening condition, a power screening condition, or a signal-to-noise ratio screening condition.

10. The method according to claim 8 or 9, wherein
the power screening condition is |RSRP_{servingcel} -RSRP (*i*)|<*δ*ₜₕ, wherein RSRP_{servingcel} is reference signal received power of the first cell, RSRP (*i*) is reference signal received power of an *i*^{th} neighboring cell of the first cell, and *δ*ₜₕ is a reference signal received power difference measurement threshold; or
the power screening condition is that RSRP (*i*) is greater than or equal to a reference signal received power threshold.

11. The method according to any one of claims 8 to 10, wherein
the signal-to-noise ratio screening condition is SINR (*i*) >*δ*ₒₚ, wherein SINR (*i*) is a signal-to-noise ratio of the *i*^{th} neighboring cell of the first cell, and *δ*ₒₚ is a signal-to-noise ratio threshold; or
the signal-to-noise ratio screening condition is |SINR_{servingcel} - SINR (*i*)|<*δ*_{SINR}, wherein SINR_{servingcel} is a signal-to-noise ratio of the first cell, SINR (*i*) is a signal-to-noise ratio of the *i*^{th} neighboring cell of the first cell, and *δ*_{SINR} is a signal-to-noise ratio difference measurement threshold.

12. The method according to claim 9, wherein the cycle screening condition is that:
the CDRX cycle is less than a time threshold;
the CDRX cycle is a maximum value in CDRX cycles of candidate cells, wherein the candidate cell comprises a neighboring cell that meets the power screening condition and/or the signal-to-noise ratio screening condition;
the CDRX cycle is a minimum value in CDRX cycles of candidate cells, wherein the candidate cell comprises a neighboring cell that meets the power screening condition and/or the signal-to-noise ratio screening condition; or
a correspondence between a delay requirement of the foreground service and the CDRX cycle is met.

13. The method according to claim 11, wherein the CDRX cycle is a long CDRX cycle.

14. A terminal device, wherein the terminal device accesses a first cell, and the terminal device is configured to perform the cell handover method according to any one of claims 1 to 13.

15. A chip, wherein the chip comprises a processor, and the processor executes a computer program stored in a memory, to implement the cell handover method according to any one of claims 1 to 13.

16. A computer-readable storage medium, wherein the computer-readable storage medium stores a computer program, and when the computer program is executed by a processor, the cell handover method according to any one of claims 1 to 13 is implemented.

17. A computer program product, wherein the computer program product comprises a computer program, and when the computer program is executed by a terminal device, the terminal device is enabled to implement the method according to any one of claims 1 to 13.
